# EUROPEAN PATENT SPECIFICATION

(11) **EP 0 320 580 B1**
(45) Date of publication and mention of the grant of the patent: **14.07.1993**
(21) Application number: 88115615.2
(22) Date of filing: 22.09.1988
(51) Int. Cl.: A23G 3/30

(54) **Center-filled chewing gum, method and apparatus for making same**
Gefüllter Kaugummi und Verfahren zu seiner Herstellung
Gomme à mâcher fourrée et procédé de fabrication

(30) Priority: 24.11.1987 CA 552558
(43) Date of publication of application: 21.06.1989
(73) Proprietor: WARNER-LAMBERT COMPANY, Morris Plains New Jersey 07950 (US)
(72) Inventor: Hager, Walter John, Mississauga Ontario (CA); Chappell, Gary Clifford, Oshawa Ontario L1G 3N3 (CA)
(74) Representative: Diehl, Hermann O. Th., Dr.

(56) References cited:
- EP-A- 0 126 570
- CH-A- 327 263
- FR-A- 1 126 059
- FR-A- 2 455 437
- US-A- 3 857 963

## Description

This invention relates to an improved center-filled chewing gum and to methods and apparatus for forming chewing gums.

Various apparatus, methods and formulations are known in the prior art for making center-filled chewing gum. Exemplary of some such prior art teachings are U.S. patents 3,806,290; 3,857,963 and 3,894,154, all to GRAFF, et al, and owned by the applicant for the present invention. Patents 3,806,290 and 3,857,963 relate to an apparatus and method, respectively, for forming center-filled chewing gum, in which concentric nozzles are disposed to form a tubular rope of chewing gum that is filled by pumping a center-fill material under pressure through the innermost of the concentric nozzles. Patent 3,894,154 discloses a suitable example of a center-filled chewing gum having a liquid fill.

Patent 4,543,769 to SCHMITZ discloses an apparatus for forming individual gum pieces from a rope of center-filled gum, and patent 4,513,012 to CARROLL, et al, discloses a center-filled chewing gum in which the center-fill comprises a powdered material.

Various other machines and methods are known in the prior art for making center-filled chewing gum, but all such prior art teachings known to applicant rely upon pressurized filling to force the center-fill material into the hollow rope of gum.

Although such prior art apparatus and methods perform satisfactorily for the intended purpose, it is not possible to achieve more than about 12 - 17%, by weight, of center fill material in the gum piece and still maintain satisfactory quality in the finished chewing gum pieces. For instance, at greater ratios the wall thickness of the outer gum shell may have uneven thickness, or other unsatisfactory deviations in uniformity and consistency may result.

Accordingly, it is an object of this invention to provide a filled chewing gum, which has an increased center fill while maintaining satisfactory quality in the finished chewing gum pieces. This object is solved by the chewing gum of claim 1, the method of making such a chewing gum according to claim 5 and an apparatus for producing it according to claim 8. Further advantageous features of the invention are evident from the dependent claims.

The invention provides a center-filled chewing gum in which the fill material comprises 35 - 40%, by weight, of the chewing gum, and a method as well as an apparatus for making same.

The invention further provides an apparatus and method for making center-filled chewing gum, in which the center-fill material is introduced into the hollow interior of a tubular gum rope without any compressive pressure being applied to the fill material.

According to a more specific aspect of the invention, there is provided an apparatus for making center-filled chewing gum, in which the apparatus has a pair of concentric tubes arranged to form a nozzle having an annular orifice through which gum is extruded to form a hollow, tubular rope of gum, and a center opening through which the center fill is caused to flow concurrently with formation of the tubular rope of gum. The center fill material enters and fills the void created by formation of the tubular rope without any compressive pressure being applied to the center fill material to cause it to fill the void.

According to a further specific aspect of the invention there is provided a method of making center-filled chewing gum, in which gum is extruded through an annular nozzle to form a tubular rope of gum, and a center-fill material is simultaneously caused to flow through a concentrically disposed center nozzle to fill the void created upon formation of the tubular rope of gum, the center-fill material being advanced at a rate sufficient just to fill the void and without any compressive pressure being applied thereto as the void is filled.

These and other aspects and advantages of the invention are achieved by the use of a unique extruder barrel nozzle having concentric inner and outer tubes defining an annular orifice therebetween through which gum is extruded to form a tubular rope of gum, and a central inner orifice through which fill material is caused to flow to fill the hollow interior of the gum rope. The volumetric rate of flow of the fill material is adjusted and regulated relative to the volume of the hollow interior of the gum being extruded such that the fill material just fills the hollow interior and does not produce any compressive force or pressure in the hollow interior of the gum rope. When a powdered fill is used, the powder is advanced through the inner concentric tube and into the hollow interior of the gum rope by use of a screw conveyor or other suitable conveying means, and when a fluid fill is used, flow of the fluid can be initiated with a pump means and then simply permitted to flow under the influence of gravity into the hollow interior of the gum rope.

In one specific example of a machine constructed in accordance with the invention, the outer tube has an inner diameter of about 5.08 cm and the inner tube has an outer diameter of about 2.85 cm, and projects beyond the end of the outer tube by about 1.27 cm. These dimensions will produce center-filled gum pieces having about 35% by weight of center-fill in the gum pieces. By increasing the outer diameter of the inner tube to 3.175 cm (one and one-quarter inches), the percentage of center fill is increased to 40%. The present invention, therefore, relates to a novel and improved method and apparatus for filling the centers of chewing gum pieces and also to an improved center-filled chewing gum.

The foregoing and other aspects and advantages of the invention will become apparent when the following detailed description is taken in conjunction with the drawings, wherein like reference characters refer to like parts throughout the several views, and wherein:
Fig. 1 is a fragmentary view in side elevation of a machine constructed in accordance with the invention;
Fig. 2 is a fragmentary top plan view of the machine of figure 1;

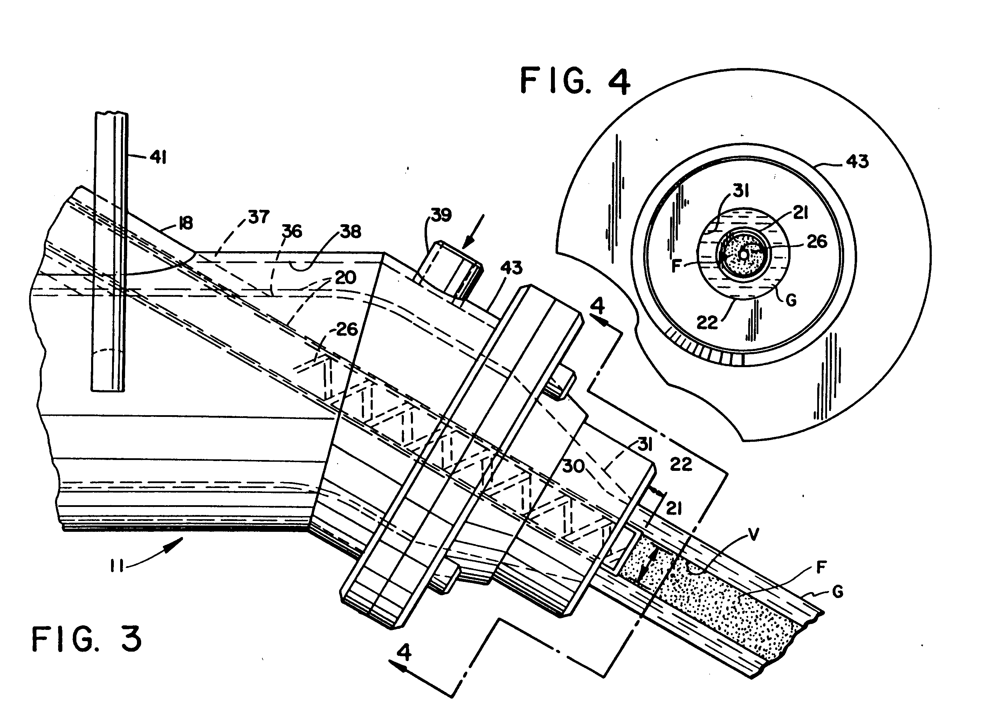

Fig. 3 is an enlarged fragmentary view in side elevation of the extruder barrel nozzle used in the machine according to the invention;
Fig. 4 is a fragmentary end view of the nozzle and is taken along line 4-4 in figure 3;
Fig. 5 is a greatly enlarged view, with portions broken away and portions shown in section, of the inner concentric tube assembly; and
Fig. 6 is a schematic view showing in section a plurality of pieces of gum produced in accordance with the invention.

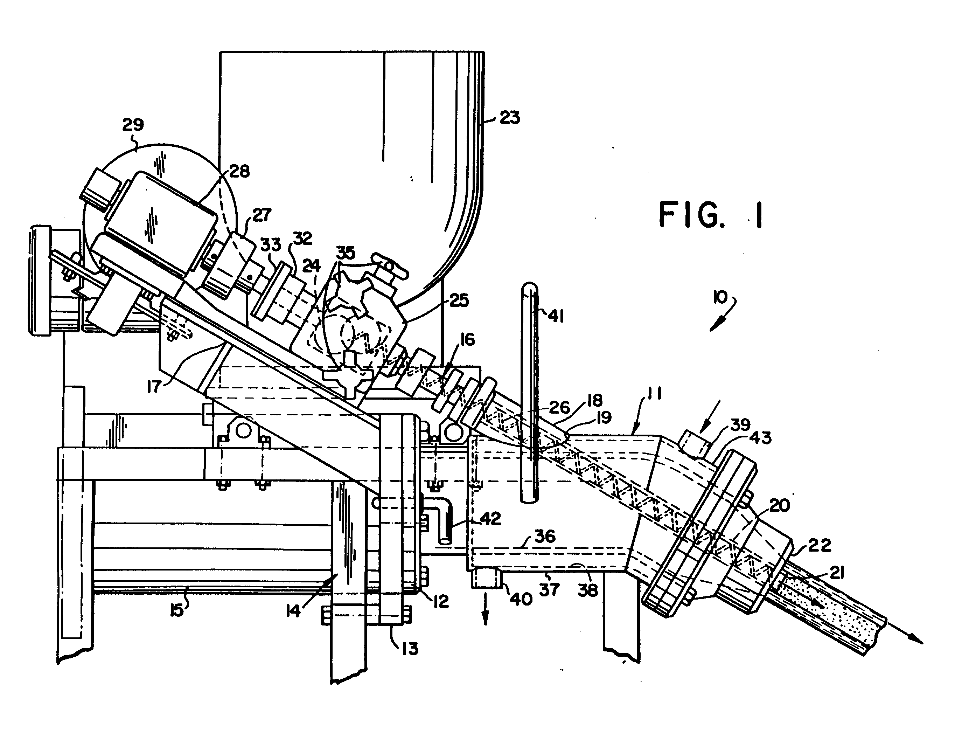

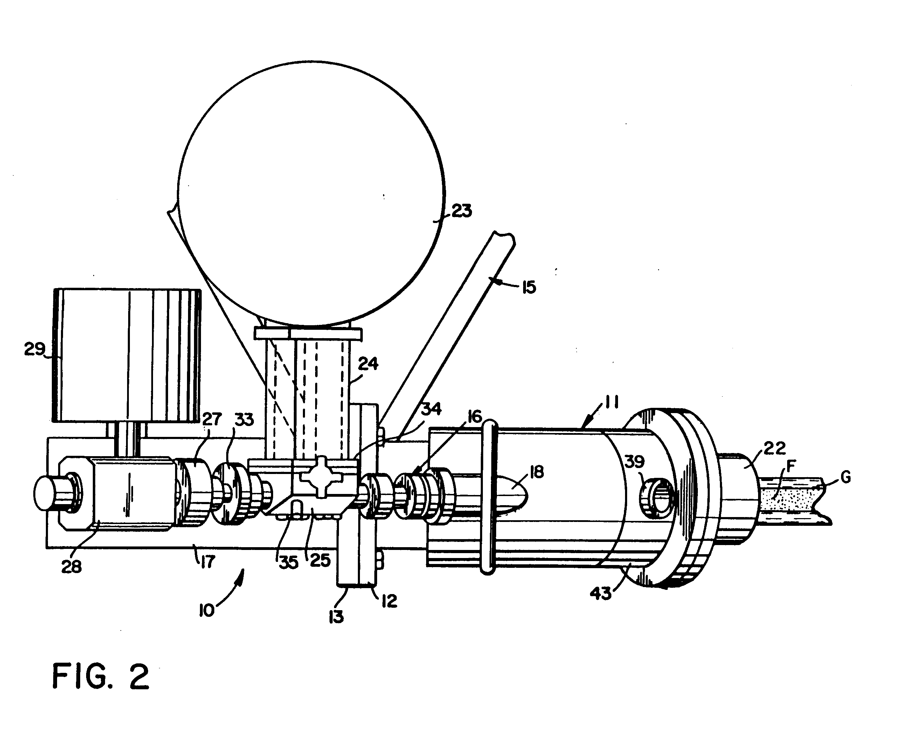

The apparatus for producing center-filled chewing gum having up to 35-40% by weight of center-fill is shown at 10 in figures 1 and 2, and comprises an extruder barrel nozzle 11 secured by a mounting flange 12 to an extruder connecting plate 13 fixed on a support frame 14. The extruder barrel nozzle 11 is connected to receive gum from a conventional extruder 15 (as used to produce applicant's chewing gum product known as "Freshen Up", for example), also supported on the support frame.

An extruder fill tube assembly 16 is supported at an angle on an inclined support platform 17 and includes a fill tube adapter 18 welded or otherwise suitably secured in an opening 19 in the side of the extruder barrel nozzle 11. An extruder fill tube 20 is supported concentrically within the adapter and projects concentrically through the extruder barrel nozzle to an outlet end 21 spaced beyond the outlet end 22 of the extruder barrel nozzle.

A holding vessel 23 is supported on the support frame to one side of the extruder fill tube assembly for holding a supply of powdered center-fill material F, and a K-Tron screw housing 24 is connected between the holding vessel and a powder screw feed chamber 25 to supply the powdered center-fill from the holding vessel to the powder screw feed chamber 25.

An elongate right hand single start screw 26 extends through the powder screw feed chamber 25 and fill tube 20 to convey the powdered fill material F along the fill tube to the outlet end thereof, where the material enters and fills the void V left in the center of the rope of gum G extruded through the nozzle 11.

The screw 26 is driven through a drive coupling 27 and Browning right angle drive gear box 28 by a motor 29. The speed of the motor and thus the speed of rotation of the screw and rate of advance or delivery of the fill material conveyed thereby are adjustable so that just enough material is conveyed to the outlet end of the fill tube to completely fill the void left in the center of the gum rope as it is being extruded through the nozzle. In other words, as the gum G is extruded through the annular orifice 30 defined between the outer tube or housing 31 of the nozzle and the inner fill tube, a void is created. This void is at a slightly reduced pressure and the gum is also continuously being conveyed away from the extruder nozzle for subsequent operations to be performed thereon. The volume of the void is known in advance and only enough fill material is conveyed through the fill tube to occupy this volume and prevent collapse of the wall of the gum rope. In effect, the fill material is being "poured" into the hollow interior of the gum rope, as compared with prior art systems in which the fill material is pumped under positive pressure into the hollow interior of the extruded gum.

As seen best in figures 1 and 2, the fill tube assembly 16 includes an air gland 32 and end seal plate 33 connected between the drive coupling 27 and feed screw 26. Further, the screw housing 24 and powder screw feed chamber 25 are secured to a mounting flange 34 on the inclined support 17 by means of a plurality of easy to manipulate screw knobs 35 whereby the screw housing, powder feed chamber and fill tube assembly may be quickly and easily connected and disconnected relative to one another.

The extruder barrel nozzle 11 has spaced apart inner and outer walls 36 and 37 defining an annular space 38 therebetween, and an inlet fitting 39 and outlet fitting 40 communicate with the space for circulating heated water or other fluid through the space to maintain the proper consistency of the gum as it is being extruded. Moreover, a carrying handle 41 is provided on the extruder barrel nozzle 11 to facilitate handling of the nozzle when it is attached to and removed from the support frame, and a locating pin 42 is provided to assist in accurately and rapidly aligning the extruder barrel nozzle to the extruder connecting plate 13 during assembly of the components. Further, the outlet end portion 43 of the extruder barrel nozzle is turned downwardly at an angle to match the angle of the fill tube assembly in order to achieve concentricity of these elements at the discharge point for the gum and fill material.

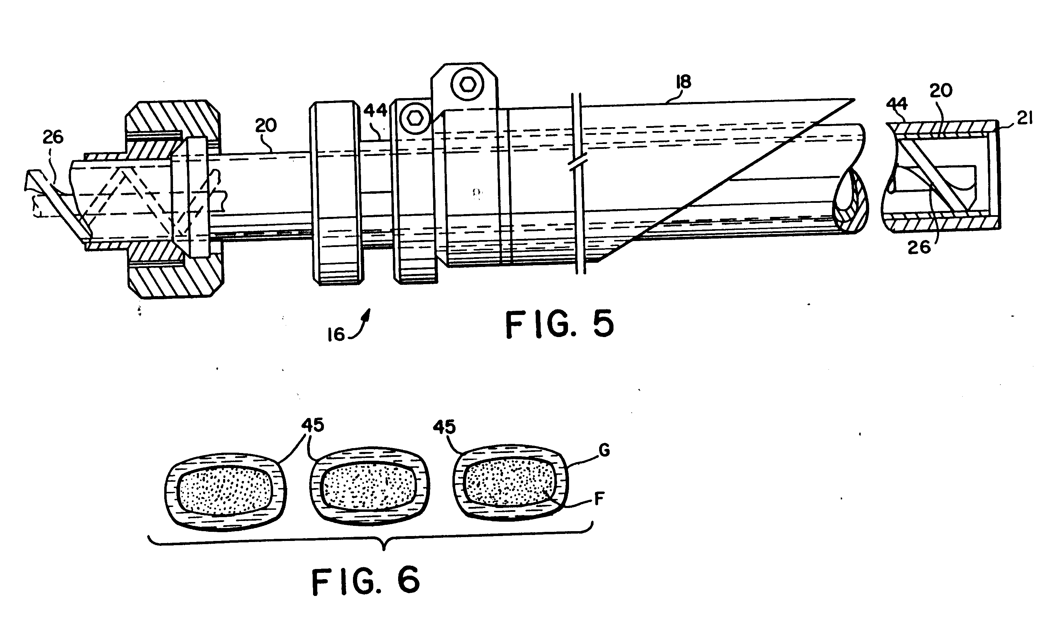

With reference to figure 5, the extruder fill tube assembly 16 includes a fill tube sleeve 44 extending concentrically between the extruder fill tube 20 and adapter 18. All of the components of the fill tube assembly, including the fill tube adapter 18, fill tube 20 and fill tube sleeve 44 are preferably made of stainless steel, although other suitable materials may be used.

Several pieces of gum produced with the apparatus of the invention are shown schematically at 45 in figure 6. The center-filled chewing gum produced with the apparatus and method of the invention represents a significant improvement over prior art center-filled chewing gum in that the present invention enables up to at least 35-40% center-fill, by weight, as compared with only about 11-17% in the prior art.

## Claims

1. Center-filled chewing gum, comprising:
a gum shell having a single hollow interior (V) filled with a center-fill material (F), said center-fill material representing 35-40%, by weight, of the chewing gum.

2. Center-filled chewing gum as claimed in claim 1, wherein:
the center-fill (F) comprises a powdered material.

3. A method of forming center-fill chewing gum, comprising the steps of:
extruding a rope of chewing gum through an orifice so that the gum rope has a hollow interior of predetermined volume; and
delivering a center-fill material into the hollow interior of the gum rope at a rate calculated to just fill the hollow interior of the gum rope without exerting compressive pressure thereon.

4. The method as claimed in claim 3, wherein;
the hollow rope of chewing gum is extruded through an annular orifice (30) and
the center-fill material is delivered through a fill tube concentric with the orifice.

5. The method of claim 4 wherein;
the annular orifice is provided between inner and outer tubes of an extruder nozzle;
the hollow rope of gum is extruded through the annular orifice;
the center-fill material is fed through the inner tube and into the hollow interior of the gum rope as the gum rope is being estruded; and
the rate of flow of the center-fill material is regulated relative to the rate of extrusion of the gum so that the center-fill material just fills the hollow interior of the gum rope without exerting compressive pressure thereon.

6. The method as claimed in claim 5, wherein;
the center-fill material comprises a powdered material.

7. The method as claimed in claim 5, wherein;
the center-fill material comprises a liquid.

8. The apparatus (10) for forming center-filled chewing gum (45), comprising:
means (11,15,21,22) for extruding a rope (G) of chewing gum through an orifice (30) so that the gum rope (G) has a hollow interior (V) of predetermined volume;
a center-fill tube (20) extending concentrically within and outwardly through said orifice (30); and
means (16,23,24,26) for delivering a center-fill material (F) at a predetermined volumetric rate through said tube (20) to the hollow interior (V) of said gum rope (G) as the gum rope is being extruded, said volumetric rate being sufficient to just fill the hollow interior of the gum rope (G) without exerting compressive pressure thereon.

9. The apparatus as claimed in claim 8, wherein:
said means for extruding a hollow rope (G) of chewing gum comprises an extruder nozzle (11) having an outer tube (22), said center-fill tube (20), being concentrically disposed within said outer tube (22) and said orifice (30) being defined between said outer tube (22) and said center-fill tube (20) whereby the orifice (30) is annular in configuration.

10. The apparatus as claimed in claim 9, wherein:
the center-fill tube (20) has an outside diameter equal to at least one-half the inside diameter of the outer tube (22).

11. The apparatus as claimed in claim 10, wherein:
the outlet end (21) of the center-fill tube (20) projects beyond the outlet end (22) of the outer tube a distance equal to approximately one-half its diameter.

12. The apparatus as claimed in one of claims 8 to 11 wherein:
the center-fill material (F) comprises a powdered material, and the means for delivering the powdered material through the center-fill tube (20) and into the hollow interior of the gum rope (G) comprises a rotating screw conveyor (26) rotatable in the center-fill tube (20).

13. The apparatus as claimed in claim 12, wherein:
the means (16) for delivering the center-fill material (F) through the center-fill tube (20) and into the hollow interior of the gum rope (45) includes a motor (29) for driving the screw conveyor (26), said motor (29) having a variable speed control so that the speed of rotation of the screw conveyor (26) and thus the rate of delivery of the center-fill material (F) can be varied.

14. The apparatus as claimed in one of claims 8 to 13, wherein:
the means for extruding a hollow rope (G) of chewing gum includes an extruder barrel nozzle (11), said nozzle having a double wall (36,37) construction defining a space (38) therebetween, and inlet (39) and outlet (40) means connected with said space (38) for circulating a heated fluid medium therethrough to maintain a desired temperature of the gum being extruded.

15. The apparatus as claimed in one of claims 8 to 14 wherein:
said nozzle outer tube (31) is inclined downwardly at its outlet end (43) and
said center-fill tube (20) extends concentrically through an adapter tube (18) fixed to the side of the nozzle (11) at an angle of inclination equal to the angle of inclination of the nozzle outer tube (43), the axes of the adapter tube (18) center fill tube (20) and nozzle outer tube (43), being coincident with one another.

16. The apparatus as claimed in claim 15, wherein:
a fill tube sleeve (44) extends concentrically between the center-fill tube (20) and adapter tube (18).

17. The apparatus as claimed in claim 16, wherein:
the center-fill tube (20), fill tube sleeve (44) and adapter tube (18) are made of stainless steel.

## Patentansprüche

1. In der Mitte gefüllter Kaugummi mit einer Gummischale, die einen einzelnen hohlen Innenraum (V) aufweist, der mit einem Material (F) für die zentrale Füllung gefüllt ist, wobei das Material für die zentrale Füllung 35-40 Gew.% des Kaugummis ausmacht.

2. In der Mitte gefüllter Kaugummi nach Anspruch 1, bei dem die zentrale Füllung (F) pulverförmiges Material enthält.

3. Verfahren zur Herstellung von in der Mitte gefülltem Kaugummi, das folgende Schritte umfaßt: Extrudieren eines Stranges Kaugummi durch eine Öffnung, so daß der Gummistrang einen hohlen Innenraum von vorgegebenem Volumen aufweist; und Zuführen eines Materials für die zentrale Füllung in den hohlen Innenraum des Gummistranges in einer Menge, die so berechnet ist, daß der hohle Innenraum des Gummistrangs gerade gefüllt wird, ohne daß ein Verdichtungsdruck darauf ausgeübt wird.

4. Verfahren nach Anspruch 3, bei dem der hohle Kaugummistrang durch eine ringförmige Öffnung (30) extrudiert wird und das Material für die zentrale Füllung durch ein mit der Öffnung konzentrisches Einfüllrohr zugeführt wird.

5. Verfahren nach Anspruch 4, bei dem die ringförmige Öffnung zwischen den inneren und äußeren Rohren einer Extruderdüse angeordnet ist, der hohle Gummistrang durch die ringförmige Öffnung extrudiert wird, das Material für die zentrale Füllung während des Extrudierens des Gummistrangs durch das innere Rohr und in den hohlen Innenraum des Gummistrangs geführt wird, und die Durchflußmenge des Materials für die zentrale Füllung in Bezug auf die Extrusionsmenge des Gummis reguliert wird, so daß das Material für die zentrale Füllung den hohlen Innenraum des Gummistrangs gerade füllt, ohne daß ein Verdichtungsdruck darauf ausgeübt wird.

6. Verfahren nach Anspruch 5, bei dem das Material für die zentrale Füllung ein pulverförmiges Material enthält.

7. Verfahren nach Anspruch 5, bei dem das Material für die zentrale Füllung eine Flüssigkeit enthält.

8. Vorrichtung (10) zur Bildung eines in der Mitte gefüllten Kaugummis (45) mit Mitteln (11, 15, 21, 22) zum Extrudieren eines Strangs (G) Kaugummi durch eine Öffnung (30), so daß der Gummistrang (G) einen hohlen Innenraum (V) von vorgegebenem Volumen aufweist, ein Rohr (20) für die zentrale Füllung, das sich konzentrisch in der Öffnung (30) und auswärts durch diese Öffnung erstreckt, und Mittel (16, 23, 24, 26) zum Zuführen eines Materials (F) für die zentrale Füllung in einem vorgegebenen Volumenstrom durch das Rohr (20) in den hohlen Innenraum (V) des Gummistrangs (G) während des Extrudierens des Gummistrangs, wobei der Volumenstrom ausreicht, gerade den hohlen Innenraum des Gummistrangs (G) zu füllen, ohne daß ein Verdichtungsdruck darauf ausgeübt wird.

9. Vorrichtung nach Anspruch 8, bei der das Mittel zum Extrudieren eines hohlen Strangs (G) Kaugummi eine Extruderdüse (11) mit einem äußeren Rohr (22) aufweist, wobei das Rohr (20) für die zentrale Füllung konzentrisch in dem äußeren Rohr (22) angeordnet ist und die Öffnung (30) zwischen dem äußeren Rohr (22) und dem Rohr (20) für die zentrale Füllung ausgebildet ist, wobei die Öffnung (30) von ringförmiger Gestalt ist.

10. Vorrichtung nach Anspruch 9, bei der das Füllrohr (20) einen Außendurchmesser aufweist, der mindestens dem halben Innendurchmesser des äußeren Rohrs (22) entspricht.

11. Vorrichtung nach Anspruch 10, bei der das Auslaßende (21) des Rohrs (20) für die zentrale Füllung über das Auslaßende (22) des äußeren Rohrs über eine Strecke, die etwa seinem halben Durchmesser entspricht, herausragt.

12. Vorrichtung nach einem der Ansprüche 8 bis 11, bei der das Material (F) für die zentrale Füllung ein pulverförmiges Material enthält, und das Mittel zum Zuführen des pulverförmigen Materials durch das Rohr (20) für die zentrale Füllung und in den hohlen Innenraum des Gummistrangs (G) eine Rotations-Förderschnecke (26) aufweist, die in dem Rohr (20) für die zentrale Füllung drehbar ist.

13. Vorrichtung nach Anspruch 12, bei der das Mittel (16) zum Zuführen des Materials (F) für die zentrale Füllung durch das Rohr (20) für die zentrale Füllung in den hohlen Innenraum des Gummistrangs (45) einen Motor (29) zum Antreiben der Förderschnecke (26) aufweist, wobei der Motor (29) eine Drehzahlregelung aufweist, so daß die Umdrehungsgeschwindigkeit der Förderschnecke (26) und damit die Fördermenge des Materials (F) für die zentrale Füllung variiert werden kann.

14. Vorrichtung nach einem der Ansprüche 8 bis 13, bei der das Mittel zum Extrudieren eines hohlen Strangs (G) Kaugummi eine Extruderzylinderdüse (11) aufweist, wobei die Düse eine Doppelwandkonstruktion (36, 37) aufweist, die einen dazwischenliegenden Raum (38) definiert, sowie mit dem Raum (38) verbundene Einlaß- (39) und Auslaßmittel (40) zum Zirkulieren eines erhitzten fließenden Mediums durch diesen Raum, um eine gewünschte Temperatur des Gummis während des Extrudierens aufrechtzuerhalten.

15. Vorrichtung nach einem der Ansprüche 8 bis 14, bei der das äußere Rohr (31) der Düse an seinem Auslaßende (43) nach unten geneigt ist und das Rohr (20) für die zentrale Füllung sich konzentrisch durch ein an der Seite der Düse (11) befestigtes Paßrohr (18) mit einem Neigungswinkel erstreckt, der dem Neigungswinkel des äußeren Rohrs (43) der Düse entspricht, wobei sich die Achsen des Paßrohrs (18), des Rohrs (20) für die zentrale Füllung und des äußeren Rohrs (43) der Düse decken.

16. Vorrichtung nach Anspruch 15, bei der sich eine Füllrohrmuffe (44) konzentrisch zwischen dem Rohr (20) für die zentrale Füllung und dem Paßrohr (18) erstreckt.

17. Vorrichtung nach Anspruch 16, bei der das Rohr (20) für die zentrale Füllung, die Füllrohrmuffe (44) und das Paßrohr (18) aus rostfreiem Stahl hergestellt sind.

## Revendications

1. Chewing-gum fourré centralement comprenant:
une coquille de chewing-gum ayant un intérieur creux unique (V) rempli d'un matériau de garniture centrale (F), ledit matériau de garniture centrale représentant 35 à 40% en poids du chewing-gum.

2. Chewing-gum fourré centralement selon la revendication 1 dans lequel:
la garniture centrale (F) est constituée d'un matériau pulvérulent.

3. Procédé de formation de chewing-gum fourré centralement, comprenant les étapes:
d'extrusion d'un boyau de chewing-gum au travers d'un orifice de telle sorte que le boyau de chewing-gum a un intérieur creux d'un volume prédéterminé et
de distribution d'un matériau de garniture centrale dans l'intérieur creux du boyau de chewing-gum à un débit calculé pour juste remplir l'intérieur creux du boyau de chewing-gum sans exercer une pression compressive sur celui-ci.

4. Procédé selon la revendication 3 dans lequel: le boyau creux de chewing-gum est extrudé au travers d'un orifice annulaire (30) et
le matériau de garniture centrale est distribué au travers d'un tube de garniture concentrique audit orifice.

5. Procédé selon la revendication 4 dans lequel:
l'orifice annulaire est prévu entre des tubes intérieur et extérieur d'une buse d'extrusion;
le boyau creux de chewing-gum est extrudé au travers de l'orifice annulaire;
le matériau de garniture centrale est acheminé au travers du tube intérieur et jusque dans l'intérieur creux du boyau de chewing-gum tandis que le boyau de chewing-gum est en cours d'extrusion;et
le débit d'écoulement du matériau de garniture centrale est réglé par rapport à la vitesse d'extrusion du chewing-gum de telle sorte que le matériau de garniture centrale se borne à remplir l'intérieur creux du boyau de chewing-gum sans exercer de pression compressive sur celui-ci.

6. Procédé selon la revendication 5 dans lequel le matériau de garniture centrale est constitué d'un matériau pulvérulent.

7. Procédé selon la revendication 5 dans lequel le matériau de garniture centrale est constitué d'un liquide.

8. Appareil (10) pour former un chewing-gum à garniture centrale (45) comprenant:
des moyens (11, 15, 21, 22) pour extruder un boyau (G) de chewing-gum au travers d'un orifice (30) de telle sorte que le boyau de chewing-gum (G) a un intérieur creux (V) de volume prédéterminé;
un tube (20) de garniture centrale s'étendant concentriquement dans ledit orifice (30) et à l'extérieur de celui-ci; et
des moyens (16,23,24,26) pour délivrer un matériau de garniture centrale (F) à un débit volumétrique prédéterminé au travers dudit tube (20) vers l'intérieur creux (V) dudit boyau de chewing-gum (G) tandis que le boyau de chewing-gum est en cours d'extrusion, ledit débit volumétrique étant suffisant pour se borner à remplir l'intérieur creux du boyau de chewing-gum (G) sans exercer de pression compressive sur celui-ci.

9. Appareil selon la revendication 8 dans lequel : lesdits moyens pour extruder un boyau creux (G) de chewing-gum comprennent une buse d'extrusion (11) ayant un tube extérieur (22), ledit tube de garniture centrale (20) étant disposé concentriquement à l'intérieur dudit tube extérieur (22) et ledit orifice (30) étant défini entre ledit tube extérieur (22) et ledit tube de garniture centrale (20) grâce à quoi l'orifice (30) a une configuration annulaire.

10. Appareil selon la revendication 9 dans lequel le tube de garniture centrale (20) a un diamètre extérieur égal au moins à la moitié du diamètre interne du tube extérieur (22).

11. Appareil selon la revendication 10 dans lequel l'extrémité de sortie (21) du tube de garniture centrale (20) se projette au-delà de l'extrémité de sortie (22) du tube extérieur sur une distance égale approximativement à la moitié de son diamètre.

12. Appareil selon l'une des revendications 8 à 11 dans lequel le matériau de garniture centrale (F) est constitué d'un matériau pulvérulent et les moyens pour distribuer le matériau pulvérulent au travers du tube de garniture centrale (20), et jusque dans l'intérieur creux du boyau de chewing-gum (G), comprennent un convoyeur à vis rotative (26) adaptée à tourner dans le tube de garniture centrale (20).

13. Appareil selon la revendication 12 dans lequel les moyens (16) pour distribuer le matériau de garniture centrale (F) au travers du tube de garniture centrale (20), et jusque dans l'intérieur creux du boyau de chewing-gum (45), comprennent un moteur (29) pour entraîner le convoyeur à vis (26), ledit moteur (29) ayant une commande à vitesse variable de telle sorte que la vitesse de rotation du convoyeur à vis (26), et donc le débit de distribution du matériau de garniture centrale (F), peuvent être variés.

14. Appareil selon l'une des revendications 8 à 13 dans lequel les moyens pour extruder un boyau creux (G) de chewing-gum comprennent une buse tubulaire d'extrusion (11), ladite buse ayant une construction à double paroi (36, 37) définissant un espace (38) entre elles, et des moyens d'entrée (39) et de sortie (40) connectés audit espace (38) pour faire circuler un milieu fluide chauffé au travers de celui-ci et maintenir le chewing-gum à une température voulue pendant son extrusion.

15. Appareil selon l'une des revendications 8 à 14 dans lequel
ledit tube extérieur de buse (31) est incliné vers le bas à son extrémité de sortie (43) et
ledit tube de garniture centrale (20) s'étend concentriquement au travers d'un tube d'adaptateur (18) fixé au côté de la buse (11) selon un angle d'inclinaison égal à l'angle d'inclinaison du tube extérieur de buse (43), les axes du tube d'adaptateur (18), du tube de garniture centrale (20) et du tube extérieur de buse (43) coïncidant les uns avec les autres.

16. Appareil selon la revendication 15 dans lequel un manchon de tube de garniture (14) s'étend concentriquement entre le tube de garniture centrale (20) et le tube d'adaptateur (18).

17. Appareil selon la revendication 16 dans lequel le tube de garniture centrale (20), le manchon de tube de garniture (44) et le tube d'adaptateur (18) sont faits en acier inoxydable.
